# EUROPEAN PATENT APPLICATION

(11) **EP 2 600 184 A1**
(43) Date of publication of application: **05.06.2013**
(21) Application number: 11812281.1
(22) Date of filing: 14.07.2011
(51) Int. Cl.: G02B 26/10, G02B 27/26, G03B 21/00, G03B 21/14, H04N 5/74

(54) **PROJECTOR**

(30) Priority: 29.07.2010 JP 2010169948
(71) Applicant: Funai Electric Co., Ltd., Daito-shi Osaka 574-0013 (JP)
(72) Inventor: NAGASHIMA, Kenji, Daito-shi Osaka 574-0013 (JP)
(74) Representative: Grünecker, Kinkeldey, Stockmair & Schwanhäusser
(86) International application number: PCT/JP2011/066048
(87) International publication number: WO 2012/014689

(57) **Abstract**

A projector capable of detecting the coordinates of a detection object at a height position away from a projection area to some extent is provided. This projector (100) includes a laser beam generation portion (61a, 62a, 63a, 64a) emitting a laser beam, a projection portion (69a, 69b) projecting an image on an arbitrary projection area, and a height detection portion (10a, 10b, 12) detecting the height of the detection object from the projection area with light reflected by the detection object.

## Description

### Technical Field

The present invention relates to a projector, and more particularly, it relates to a projector including a laser beam generation portion.

### Background Art

In general, a projector including a laser beam generation portion is known. Such a projector is disclosed in Japanese Patent Laying-Open No. 2009-258569, for example.

In Japanese Patent Laying-Open No. 2009-258569, there is disclosed a laser scanning projector including a plurality of laser diodes (laser beam generation portions) generating laser beams of three colors of red, green, and blue, respectively, a laser diode (laser beam generation portion) generating an infrared laser beam, a rotatable MEMS mirror, and a photodiode detecting reflected light of the infrared laser beam. This laser scanning projector is configured to project an image on a wall surface or the like by reflecting the laser beams of three colors of red, green, and blue generated from the plurality of laser diodes, respectively, by the MEMS mirror and scanning the laser beams by rotation of the MEMS mirror.

Furthermore, this laser scanning projector is configured to emit the infrared laser beam generated from the laser diode to the vicinity above the wall surface (1 mm above the wall surface) along the front surface of the wall surface. The infrared laser beam is scanned horizontally above the wall surface by the rotation of the MEMS mirror. Thus, a distance from the finger of a user to the photodiode is measured by detecting light reflected by the finger by the photodiode when the finger touches the wall surface. Coordinates on the wall surface touched by the finger are obtained on the basis of the distance from the finger to the photodiode and the coordinates of the image in a horizontal plane emitted with the laser beams of three colors of red, green, and blue at the point of time when the light reflected from the finger is detected. Thus, it is capable of detecting that the finger touches an icon or the like on the basis of the coordinates on the wall surface touched by the finger when the icon is projected with the laser beams of three colors of red, green, and blue, for example.

### Prior Art

### Patent Document

Patent Document 1: Japanese Patent Laying-Open No. 2009-258569

### Summary of the Invention

### Problem to be Solved by the Invention

However, in the laser scanning projector described in the aforementioned Patent Laying-Open No. 2009-258569, there is such a problem that it is not capable of detecting the coordinates of the finger at a height position away from the wall surface (projection area) to some extent although it is capable of detecting the coordinates (coordinates in the horizontal plane) of a detection object (finger) on the wall surface.

The present invention has been proposed in order to solve the aforementioned problem, and an object of the present invention is to provide a projector capable of detecting the coordinates of a detection object at a height position away from a projection area to some extent. Means for Solving the Problem and Effects of the Invention

A projector according to an aspect of the present invention includes a laser beam generation portion emitting a laser beam, a projection portion projecting an image on an arbitrary projection area by scanning the laser beam emitted from the laser beam generation portion, and a height detection portion detecting the height of a detection object from the projection area with light reflected by the detection object.

As hereinabove described, this projector according to the aspect includes the height detection portion detecting the height of the detection object from the projection area with the light reflected by the detection object, whereby the height of the detection object from the projection area can be detected. Thus, when the image is projected on the projection area by scanning of the laser beam, for example, the coordinates of the detection object at a height position away from the projection area to some extent can be detected on the basis of the coordinates of the image in a horizontal plane projected with the laser beam at the point of time when the light is reflected by the detection object and the height of the detection object from the projection area.

Preferably in the aforementioned projector according to the aspect, the height detection portion includes a light detector to detect the light reflected by the detection object, and the height of the detection object from the projection area is calculated on the basis of a difference in light intensity between portions of the light detector detecting the light reflected by the detection object. According to this structure, the intensity of the light reflected by the detection object varies in response to the height of the detection object from the projection area while the intensity of the light reflected by the detection object varies with the portions of the light detector detecting the light, and hence the height of the detection object from the projection area can be easily detected by the calculation based on the difference in light intensity between the portions of the light detector detecting the light.

Preferably in this case, the light detector includes a first light detector and a second light detector whose height from the projection area is higher than that of the first light detector, and the height of the detection object from the projection area is calculated on the basis of the magnitude of a difference value between the intensity of light detected by the first light detector and the intensity of light detected by the second light detector. According to this structure, the intensity of the light reflected by the detection object and detected by the second light detector is larger than the intensity of the light reflected by the detection object and detected by the first light detector when the height of the detection object from the projection area is relatively high, and the intensity of the light reflected by the detection object and detected by the first light detector is larger than the intensity of the light reflected by the detection object and detected by the second light detector when the height of the detection object from the projection area is relatively low. Thus, the difference between the intensity of the light detected by the first light detector and the intensity of the light detected by the second light detector is obtained, whereby the height of the detection object from the projection area can be easily detected.

Preferably, the aforementioned projector in which the detector includes the first light detector and the second light detector further includes a subtractor connected to the first light detector and the second light detector, and the height of the detection object from the projection area is calculated on the basis of the magnitude of the difference value between the intensity of the light detected by the first light detector and the intensity of the light detected by the second light detector, obtained by the subtractor. According to this structure, the difference between the intensity of the light detected by the first light detector and the intensity of the light detected by the second light detector can be easily calculated by the subtractor.

Preferably in the aforementioned projector in which the detector includes the first light detector and the second light detector, when the intensity of the light detected by the first light detector is smaller than the intensity of the light detected by the second light detector, the height of the detection object is determined to become larger as the difference value between the intensity of the light detected by the first light detector and the intensity of the light detected by the second light detector increases. According to this structure, the height of the detection object can be calculated in detail on the basis of the magnitude of the difference value between the intensity of the light detected by the first light detector and the intensity of the light detected by the second light detector.

Preferably, the aforementioned projector in which the detector includes the first light detector and the second light detector further includes an adder connected to the first light detector and the second light detector, and the intensity of light reflected from the detection object and detected by the first light detector and the intensity of light reflected from the detection object and detected by the second light detector are added to each other by the adder to determine the coordinates of an image projected from the laser beam generation portion at the point of time when the added intensity of the reflected light is largest as the coordinates of the detection object. According to this structure, when the detection object is the finger of a user, for example, the intensity of the light reflected from the nail of the finger is larger than the intensity of the light reflected from the skin of the finger, and hence a portion of the image touched by the finger of the user can be accurately specified.

Preferably in the aforementioned projector in which the height detection portion includes the light detector, the laser beam generation portion includes a first laser beam generation portion emitting visible light and a second laser beam generation portion emitting light, other than visible light, having an optical axis substantially the same as that of the laser beam emitted from the first laser beam generation portion and scanned in synchronization with the laser beam emitted from the first laser beam generation portion, an image is projected on an arbitrary projection area by scanning the laser beam emitted from the first laser beam generation portion, and the height of the detection object from the projection area is calculated on the basis of a difference in the intensity of light emitted from the second laser beam generation portion and reflected by the detection object between the portions of the light detector. According to this structure, even if the detection object is black, the light other than the visible light is reflected from the detection object so that the height of the detection object from the projection area can be detected.

Preferably in this case, the first laser beam generation portion is configured to emit red, green, and blue visible light while the second laser beam generation portion is configured to emit infrared light. According to this structure, the height of the detection object from the projection area can be calculated with the infrared light reflected by the detection object while the image is displayed on the projection area with the red, green, and blue visible light.

Preferably in the aforementioned projector in which the first laser beam generation portion emits the visible light while the second laser beam generation portion emits the infrared light, the light detector to detect the light reflected by the detection object includes an infrared detector, and the height of the detection object from the projection area is calculated on the basis of a difference in infrared light intensity between portions of the infrared detector detecting infrared light reflected by the detection object. According to this structure, the infrared light reflected by the detection object can be easily detected by the infrared detector.

Preferably in the aforementioned projector in which the first laser beam generation portion emits the visible light while the second laser beam generation portion emits the infrared light, the light quantities of the red, green, and blue visible light emitted from the first laser beam generation portion vary according to a projected image while the light quantity of the infrared light emitted from the second laser beam generation portion is substantially constant. According to this structure, the light quantities of the visible light vary so that the image having shades can be projected, and the light quantity of the infrared light is substantially constant so that control for emitting the infrared light can be facilitated.

Preferably in the aforementioned projector in which the height detection portion includes the light detector, the laser beam generation portion is configured to emit visible light, and an image is projected on an arbitrary projection area by scanning the visible light emitted from the laser beam generation portion while the height of the detection object from the projection area is calculated on the basis of a difference in the intensity of visible light emitted from the laser beam generation portion and reflected by the detection object between the portions of the light detector. According to this structure, the structure of the projector can be simplified, dissimilarly to a case where a laser beam generation portion emitting light other than the visible light, for example, is provided separately and the height of the detection object from the projection area is calculated with the light other than the visible light.

Preferably in this case, the light detector to detect the light reflected by the detection object includes a visible light detector, and the height of the detection object from the projection area is calculated on the basis of a difference in visible light intensity between portions of the visible light detector detecting the visible light reflected by the detection object. According to this structure, the visible light reflected by the detection object can be easily detected by the visible light detector.

Preferably, the aforementioned projector according to the aspect further includes a control portion performing a prescribed operation on the basis of the height of the detection object from the projection area detected by the height detection portion. According to this structure, in addition to an operation on the projection area, an operation at the height position away from the projection area to some extent can be easily performed on the projected image by the control portion.

Preferably in this case, an image corresponding to an icon is projected on the projection area by scanning the laser beam emitted from the laser beam generation portion, and the control portion is configured to determine an operation of dragging the icon or an operation of separating the detection object from the icon on the basis of the height of the detection object from the projection area detected by the height detection portion and to project a picture representing drag of the icon and movement of the icon in conjunction with movement of the detection object when determining that the icon has been dragged. According to this structure, in addition to the operation on the projection area such as an operation of selecting the icon, the operation at the height position away from the projection area to some extent such as the operation of dragging the icon can be performed, and hence the types of possible operations can be increased.

Preferably in the aforementioned projector projecting the image corresponding to the icon on the projection area, the control portion is configured to determine that the detection object has dragged the icon projected on the projection area if the height of the detection object from a surface of the projection area is less than a prescribed height, when determining that the detection object is separated from the surface of the projection area after determining that the height of the detection object from the surface of the projection area is substantially zero on the basis of the height of the detection object from the projection area detected by the height detection portion. According to this structure, the picture representing the drag of the icon can be easily projected on the basis of the operation of the detection object.

Preferably in this case, the control portion is configured to determine that the detection object has dropped the icon projected on the projection area when determining that the height of the detection object from the surface of the projection area is substantially zero on the basis of the height of the detection object from the projection area detected by the height detection portion after determining that the detection object has dragged the icon projected on the projection area. According to this structure, a picture representing the drop of the icon can be easily projected on the basis of the operation of the detection object.

Preferably in the aforementioned projector projecting the image corresponding to the icon on the projection area, the control portion is configured to determine that the detection object has released the icon projected on the projection area if the height of the detection object from a surface of the projection area is at least a prescribed height, when determining that the detection object is separated from the surface of the projection area after determining that the height of the detection object from the surface of the projection area is substantially zero on the basis of the height of the detection object from the projection area detected by the height detection portion. According to this structure, a picture representing the release of the icon can be easily projected on the basis of the operation of the detection object.

Preferably in the aforementioned projector including the control portion performing the prescribed operation on the basis of the height of the detection object from the projection area, an image corresponding to a pointer is projected on the projection area by scanning the laser beam emitted from the laser beam generation portion, and the control portion is configured to project an image representing movement of the pointer in conjunction with movement of the detection object when determining that the detection object has moved horizontally on a surface of the projection area while the height of the detection object from the surface of the projection area is maintained substantially zero after determining that the height of the detection object from the surface of the projection area is substantially zero on the basis of the height of the detection object from the projection area detected by the height detection portion. According to this structure, a picture representing the movement of the pointer can be easily projected on the basis of the operation of the detection object.

Preferably in the aforementioned projector including the control portion performing the prescribed operation on the basis of the height of the detection object from the projection area, the laser beam generation portion includes a plurality of laser beam generation portions emitting laser beams corresponding to an image for a right eye and an image for a left eye and is configured to project a three-dimensional image on the projection area by scanning the laser beams emitted from the plurality of laser beam generation portions, and the control portion is configured to determine whether or not the detection object touches the three-dimensional image on the basis of the height of the detection object from the projection area detected by the height detection portion and to project a picture representing movement of the three-dimensional image in conjunction with movement of the detection object when determining that the detection object touches the three-dimensional image. According to this structure, in addition to the operation on the projection area such as the operation of selecting the icon, the operation at the height position away from the projection area to some extent such as the operation of moving the three-dimensional image can be performed, and hence the types of possible operations can be increased.

Preferably in this case, the control portion is configured to obtain the three-dimensional coordinates of the detection object by obtaining the coordinates of the detection object in a horizontal plane on the basis of coordinates on the projection area scanned with the laser beams at the point of time when the laser beams are reflected by the detection object in addition to the height of the detection object from the projection area detected by the height detection portion and to determine whether or not the detection object touches the three-dimensional image on the basis of the obtained three-dimensional coordinates. According to this structure, the control portion can more accurately determine whether or not the detection object touches the three-dimensional image, as compared with a case where the control portion determines whether or not the detection object touches the three-dimensional image with only the height of the detection object from the projection area.

### Brief Description of the Drawings

[Fig. 1] A schematic view showing a used state of a projector according to a first embodiment of the present invention.
[Fig. 2] A block diagram showing the structure of the projector according to the first embodiment of the present invention.
[Fig. 3] A flowchart showing operations of a control portion of the projector according to the first embodiment of the present invention.
[Fig. 4] A diagram for illustrating an operation of detecting the height of a detection object located at a relatively low position of the projector according to the first embodiment of the present invention.
[Fig. 5] A diagram for illustrating an operation of detecting the height of the detection object located at a relatively high position of the projector according to the first embodiment of the present invention.
[Fig. 6] A diagram for illustrating an operation of moving a pointer of the projector according to the first embodiment of the present invention.
[Fig. 7] A plan view for illustrating the operation of moving the pointer shown in Fig. 6.
[Fig. 8] A diagram for illustrating a dragging and dropping operation of the projector according to the first embodiment of the present invention.
[Fig. 9] A plan view for illustrating the dragging and dropping operation shown in Fig. 8.
[Fig. 10] A diagram for illustrating an operation of separating a finger from an icon of the projector according to the first embodiment of the present invention.
[Fig. 11] A block diagram showing the structure of a projector according to a second embodiment of the present invention.
[Fig. 12] A block diagram showing the structure of a projector according to a third embodiment of the present invention.
[Fig. 13] A diagram for illustrating an operation of moving a three-dimensional image horizontally of the projector according to the third embodiment of the present invention.
[Fig. 14] A diagram for illustrating an operation of moving a three-dimensional image obliquely downward of the projector according to the third embodiment of the present invention.
[Fig. 15] A diagram for illustrating an operation of toppling a three-dimensional image of the projector according to the third embodiment of the present invention.

### Modes for Carrying Out the Invention

Embodiments embodying the present invention are now described on the basis of the drawings.

### (First Embodiment)

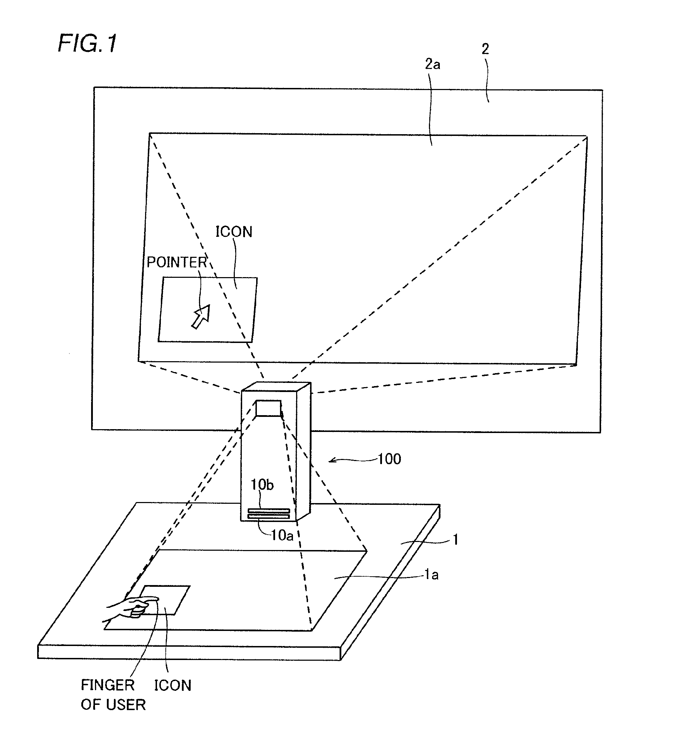

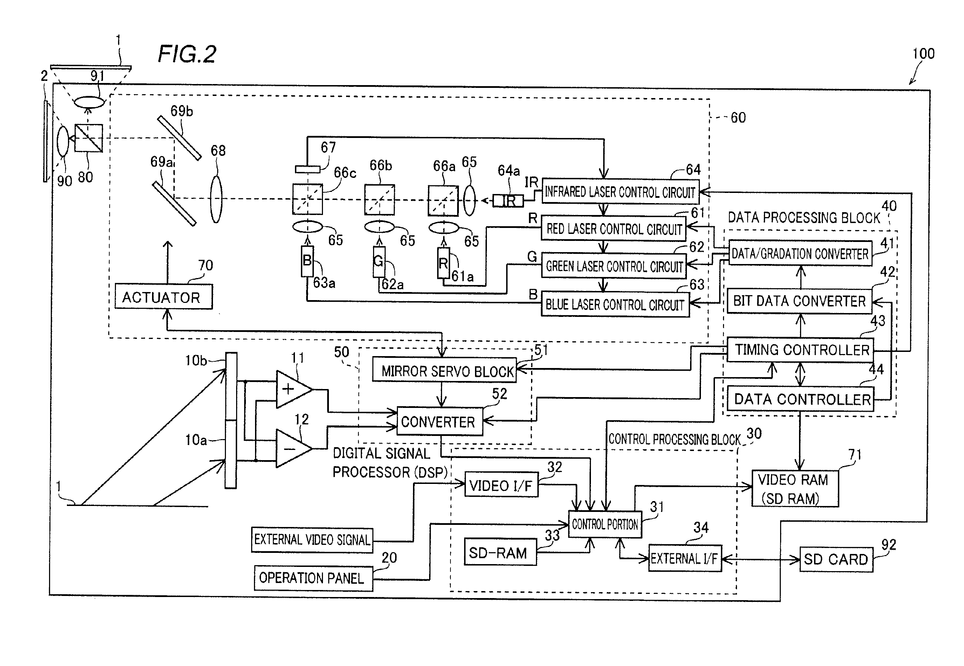

The structure of a projector 100 according to a first embodiment of the present invention is described with reference to Figs. 1 and 2.

The projector 100 according to the first embodiment of the present invention is configured to be used in a state arranged on a table 1, as shown in Fig. 1. Furthermore, the projector 100 is configured to project (two-dimensionally display (display in a planar manner)) an image 2a for presentation (for display) onto a projection area such as a screen 2. The table 1 and the screen 2 are examples of the "projection area" in the present invention. In addition, the projector 100 is configured to project (two-dimensionally display (display in a planar manner)) an image 1a similar to the image 2a for presentation onto the upper surface of a projection area such as the table 1. The projector 100 projects the image 1a on the table 1 so that the magnitude thereof is smaller than that of the image 2a projected on the screen 2. According to the first embodiment, two infrared detectors 10a and 10b to detect infrared light are provided on a side surface of the projector 100 projecting the image 1a. The infrared detector 10b is so arranged that the height thereof from a surface of the table 1 is larger than the height of the infrared detector 10a from the surface of the table 1. The infrared detector 10a is an example of the "light detector", the "first light detector", or the "height detection portion" in the present invention. The infrared detector 10b is an example of the "light detector", the "second light detector", or the "height detection portion" in the present invention.

As shown in Fig. 2, the projector 100 includes an operation panel 20, a control processing block 30, a data processing block 40, a digital signal processor (DSP) 50, a laser beam source 60, a video RAM (SD RAM) 71, a beam splitter 80, and two magnifying lenses 90 and 91.

The control processing block 30 includes a control portion 31 controlling the entire projector 100, a video I/F 32 which is an interface (I/F) to receive an external video signal, an SD-RAM 33, and an external I/F 34.

The data processing block 40 includes a data/gradation converter 41, a bit data converter 42, a timing controller 43, and a data controller 44.

The digital signal processor 50 includes a mirror servo block 51 and a converter 52.

The laser beam source 60 includes a red laser control circuit 61, a green laser control circuit 62, a blue laser control circuit 63, and an infrared laser control circuit 64. According to the first embodiment, the red laser control circuit 61, the green laser control circuit 62, the blue laser control circuit 63, and the infrared laser control circuit 64 are connected with a red LD (laser diode) 61a emitting a red laser beam, a green LD 62a emitting a green laser beam, a blue LD 63a emitting a blue laser beam, and an infrared LD 64a emitting an infrared laser beam, respectively. The optical axes of the laser beams emitted from the red LD 61a, the green LD 62a, the blue LD 63a, and the infrared LD 64a substantially coincide with each other when the laser beams are incident on a MEMS mirror 69a. The red LD 61a, the green LD 62a, and the blue LD 63a and the infrared LD 64a are configured to operate in synchronization with each other. The red, green, and blue laser beams emitted from the red LD 61a, the green LD 62a, and the blue LD 63a, respectively, are scanned, whereby the images 1a and 2a are projected on the table 1 and the screen 2, respectively. Light emitted from the infrared LD 64a and reflected by a detection object is detected by the infrared detectors 10a and 10b. Whereas the light quantity of the red laser beam emitted from the red LD 61a, the light quantity of the green laser beam emitted from the green LD 62a, and the light quantity of the blue laser beam emitted from the blue LD 63a vary according to a projected image, the light quantity of the infrared laser beam emitted from the infrared LD 64a is substantially constant. The red LD 61a, the green LD 62a, and the blue LD 63a are examples of the "laser beam generation portion" or the "first laser beam generation portion" in the present invention. The infrared LD 64a is an example of the "laser beam generation portion" or the "second laser beam generation portion" in the present invention.

The laser beam source 60 further includes four collimator lenses 65, three polarizing beam splitters 66a, 66b, and 66c, a light detector 67, a lens 68, the MEMS mirror 69a to horizontally scan the laser beams, a MEMS mirror 69b to vertically scan the laser beams, and an actuator 70 to horizontally and vertically drive the MEMS mirror 69a and the MEMS mirror 69b. The MEMS mirrors 69a and 69b are examples of the "projection portion" in the present invention.

The operation panel 20 is provided on a front or side surface of a housing of the projector 100. The operation panel 20 includes a display (not shown) to display operation contents, switches accepting operational inputs into the projector 100, and the like, for example. The operation panel 20 is configured to transmit a signal responsive to operation contents to the control portion 31 of the control processing block 30 when accepting an operation of a user.

The projector 100 is so configured that the external video signal supplied from outside is input in the video I/F 32. The external I/F 34 is so configured that a memory such as an SD card 92, for example, is mountable thereon. The projector 100 is so configured that the control portion 31 reads data from the SD card 92 and the video RAM 71 stores the read data.

The control portion 31 is configured to control display of a picture based on image data temporarily held in the video RAM 71 by intercommunicating with the timing controller 43 of the data processing block 40.

In the data processing block 40, the timing controller 43 is configured to read data held in the video RAM 71 through the data controller 44 on the basis of a signal output from the control portion 31. The data controller 44 is configured to transmit the read data to the bit data converter 42. The bit data converter 42 is configured to transmit the data to the data/gradation converter 41 on the basis of a signal from the timing controller 43. The bit data converter 42 has a function of converting externally supplied image data to data suitable to a system projectable with the laser beams. The timing controller 43 is connected to the infrared laser control circuit 64 and is configured to transmit a signal to the infrared laser control circuit 64 to emit the laser beam from the infrared LD 64a in synchronization with the laser beams emitted from the red LD 61a, the green LD 62a, and the blue LD 63a.

The data/gradation converter 41 is configured to convert data output from the bit data converter 42 to gradations of three colors of red (R), green (G), and blue (B) and to transmit data after conversion to the red laser control circuit 61, the green laser control circuit 62, and the blue laser control circuit 63.

The red laser control circuit 61 is configured to transmit the data from the data/gradation converter 41 to the red LD 61a. The green laser control circuit 62 is configured to transmit the data from the data/gradation converter 41 to the green LD 62a. The blue laser control circuit 63 is configured to transmit the data from the data/gradation converter 41 to the blue LD 63a.

The two infrared detectors 10a and 10b provided on the side surface of the projector 100 projecting the image 1a each are connected with an adder 11 and a subtractor 12. The adder 11 has a function of adding the intensity of light detected by the infrared detector 10a and the intensity of light detected by the infrared detector 10b to each other. The subtractor 12 has a function of subtracting the intensity of the light detected by the infrared detector 10a and the intensity of the light detected by the infrared detector 10b from each other. The projector 100 is so configured that signals output from the adder 11 and the subtractor 12 are input in the control portion 31 through the converter 52. The subtractor 12 is an example of the "height detection portion" in the present invention.

According to the first embodiment, the control portion 31 is configured to calculate the height of the detection object (finger of the user) from the table 1 on the basis of a difference between the intensity of light reflected from the detection object and detected by the infrared detector 10a and the intensity of light reflected from the detection object and detected by the infrared detector 10b and to perform prescribed operations. Specifically, the control portion 31 is configured to determine an operation of dragging an icon or an operation of separating the detection object from the icon on the basis of the height of the detection object from the table 1 detected by the infrared detectors 10a and 10b and to project a picture representing drag of the icon and movement of the icon in conjunction with movement of the detection object when determining that the icon has been dragged.

Next, operations of the control portion 31 in detecting the detection object by the projector 100 are described with reference to Figs. 1 and 3 to 10.

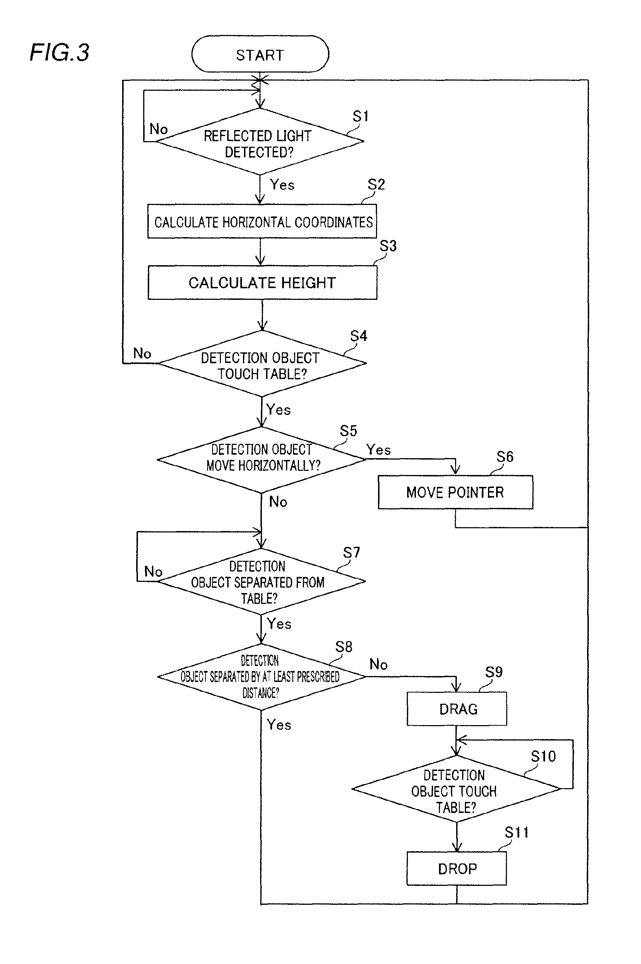

As shown in Fig. 1, the red LD 61a, the green LD 62a, and the blue LD 63a (see Fig. 2) emit the red, green, and blue laser beams, respectively, and the laser beams are scanned, whereby the images 1a and 2a are projected on the table 1 and the screen 2, respectively. For example, an image such as the icon is projected on the table 1 and the screen 2. Furthermore, the infrared LD 64a emits the infrared laser beam in synchronization with the red LD 61a, the green LD 62a, and the blue LD 63a, and the laser beam is scanned. As shown in Fig. 3, the control portion 31 determines whether or not the infrared laser beam emitted from the infrared LD 64a and reflected by the detection object (finger of the user, for example) has been detected by the infrared detectors 10a and 10b at a step S1. When the infrared laser beam reflected by the detection object has not been detected by the infrared detectors 10a and 11b, the control portion 31 repeats the operation at the step S1.

When determining that the infrared laser beam reflected by the detection object has been detected by the infrared detectors 10a and 10b at the step S1, the control portion 31 advances to a step S2. At the step S2, the control portion 31 determines the coordinates (coordinates on the table 1) of the image 1a scanned with the laser beam emitted from the red LD 61a at the point of time when the infrared detectors 10a and 10b detect the light reflected from the detection object as the coordinates of the detection object on the table 1. When the detection object is the finger of the user, the intensity of light reflected from the nail of the finger is larger than the intensity of light reflected from the skin of the finger. The control portion 31 adds the intensity of the light reflected from the detection object and detected by the infrared detector 10a and the intensity of the light reflected from the detection object and detected by the infrared detector 10b to each other with the adder 11 (see Fig. 2) and determines the coordinates of the image 1a emitted from the red LD 61a at the point of time when the added intensity of the reflected light is largest (at the point of time when the light is reflected from the finger) as the coordinates of the detection object on the table 1, whereby the control portion 31 can specify a portion of the image touched by the finger of the user.

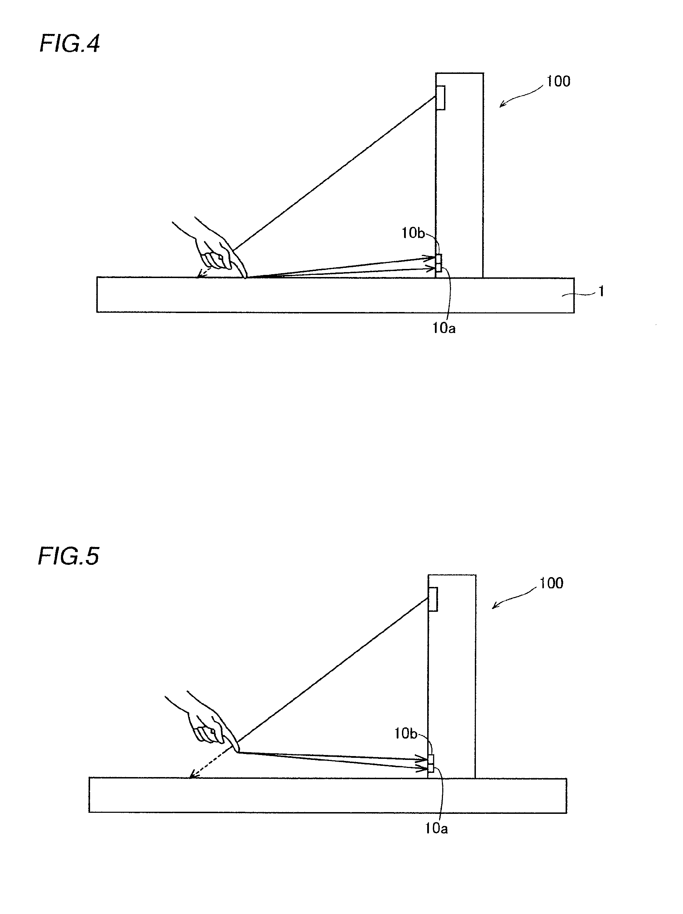

Then, the control portion 31 advances to a step S3, and calculates the height of the detection object from the table 1 on the basis of the difference between the intensity of the light reflected from the detection object and detected by the infrared detector 10a and the intensity of the light reflected from the detection object and detected by the infrared detector 10b.Specifically, when the detection object (finger of the user) touches the surface of the table 1 as shown in Fig. 4, for example, the intensity of the light reflected from the detection object and detected by the infrared detector 10a is larger than the intensity of the light reflected from the detection object and detected by the infrared detector 10b provided at a position higher than the infrared detector 10a since the angle of the reflected light incident on the infrared detector 10a is nearly perpendicular. As a difference value between the intensity of the reflected light detected by the infrared detector 10a and the intensity of the reflected light detected by the infrared detector 10b increases, the control portion 31 determines that the height of the detection object is larger. On the other hand, when the detection object (finger of the user) is separated from the surface of the table 1 as shown in Fig. 5, the intensity of the light reflected from the detection object and detected by the infrared detector 10b is larger than the intensity of the light reflected from the detection object and detected by the infrared detector 10a provided at a position lower than the infrared detector 10b since the angle of the reflected light incident on the infrared detector 10b is nearly perpendicular. Thus, the height of the detection object from the surface of the table 1 varies, whereby the intensity of the reflected light detected by the infrared detector 10a and the intensity of the reflected light detected by the infrared detector 10b vary. Therefore, the height of the detection object from the surface of the table 1 can be calculated from the magnitude of the difference between the intensity of the reflected light detected by the infrared detector 10a and the intensity of the reflected light detected by the infrared detector 10b.

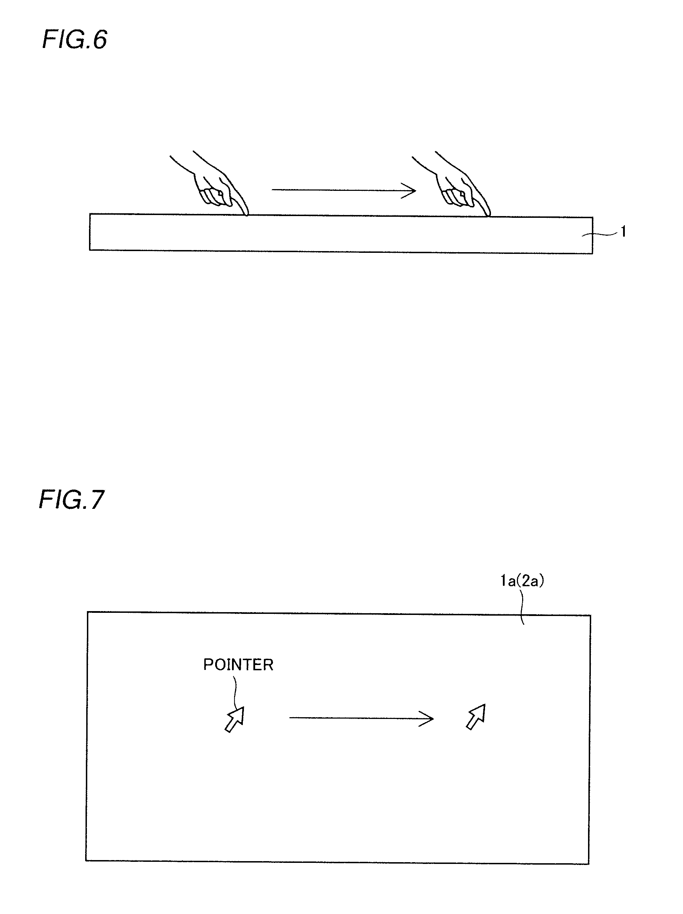

Then, the control portion 31 advances to a step S4, and determines whether or not the detection object touches the surface of the table 1 (whether or not the height of the detection object from the surface of the table 1 is zero). When determining that the detection object does not touch the surface of the table 1 at the step S4, the control portion 31 returns to the step S1. In other words, the control portion 31 repeats the operations at the steps S1 to S4 until the detection object touches the surface of the table 1. When determining that the detection object touches the surface of the table 1 at the step S4, the control portion 31 advances to a step S5, and determines whether or not the detection object has moved horizontally on the surface of the table 1. In other words, the control portion 31 determines whether or not the detection object has moved on the surface of the table 1 while the height of the detection object from the surface of the table 1 is maintained zero, as shown in Fig. 6. When determining that the detection object has moved horizontally on the surface of the table 1, the control portion 31 advances to a step S6, and projects a picture representing movement of a pointer in conjunction with the movement of the detection object on the table 1 and the screen 2, as shown in Fig. 7. Thereafter, the control portion 31 returns to the step S1.

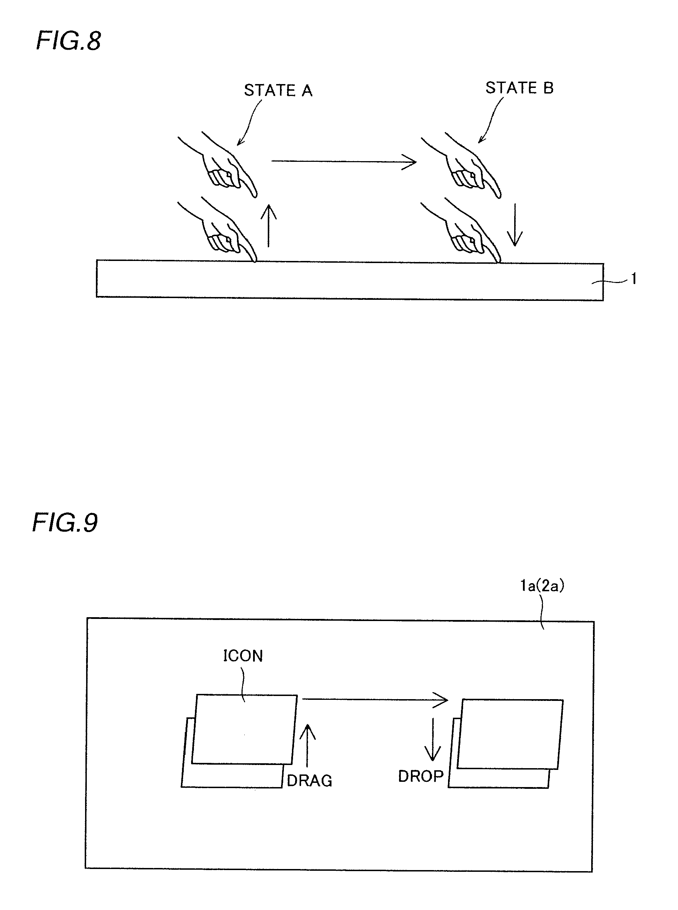

When determining that the detection object has not moved horizontally on the surface of the table 1 at the step S5, the control portion 31 advances to a step S7, and determines whether or not the detection object is separated from the surface of the table 1 (whether or not the height of the detection object from the surface of the table 1 is greater than zero). It is assumed that the coordinates of the detection object on the table 1 correspond to the image of the icon. When determining that the detection object is separated from the surface of the table 1 at the step S7, the control portion 31 advances to a step S8, and determines whether or not the distance of the detection object from the surface of the table 1 is at least a prescribed distance. When determining that the distance of the detection object from the surface of the table 1 is less than the prescribed distance (see a state A in Fig. 8) at the step S8, the control portion 31 advances to a step S9, and determines that the detection object (finger of the user) has dragged the icon projected on the table 1. As shown in Fig. 9, the picture representing the drag of the icon is projected on the table 1 (screen 2). Thereafter, the image of the icon is moved in conjunction with the movement of the detection object (a state B in Fig. 8). When determining that the detection object touches the surface of the table 1 at a step S10, the control portion 31 determines that the icon has been dropped. Then, at a step S11, a picture representing the drop of the icon is projected on the table 1 (screen 2). Thereafter, the control portion 31 returns to the step S1.

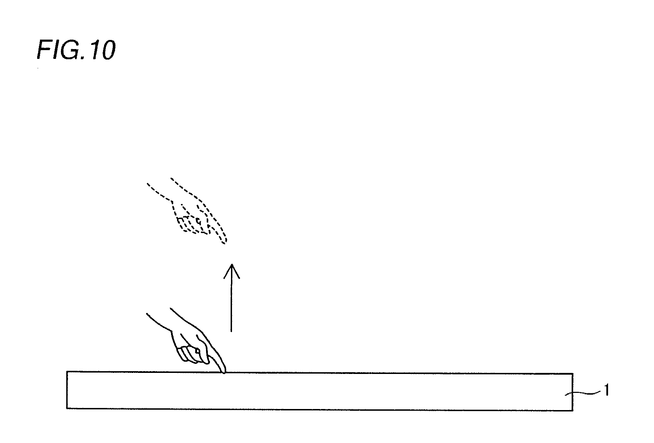

When determining that the distance of the detection object from the surface of the table 1 is at least the prescribed distance (see Fig. 10) at the step S8, the control portion 31 determines that the detection object (finger of the user) has released the icon projected on the table 1. Thereafter, the control portion 31 returns to the step S1.

According to the first embodiment, as hereinabove described, the projector 100 includes the infrared detectors 10a and 10b and the subtractor 12 detecting the height of the detection object from the table 1 with the light reflected by the detection object, whereby the height of the detection object from the table 1 can be detected. Thus, when the image 1a is projected on the table 1 by scanning of the laser beams, the coordinates of the detection object at a height position away from the table 1 to some extent can be detected on the basis of the coordinates of the image 1a in a horizontal plane projected with the laser beams at the point of time when the light is reflected by the detection object and the height of the detection object from the table 1.

According to the first embodiment, as hereinabove described, the height of the detection object from the table 1 is calculated on the basis of a difference in light intensity between portions (infrared detectors 10a and 10b) detecting the light reflected by the detection object. Thus, the intensity of the light reflected by the detection object varies in response to the height of the detection object from the table 1 while the intensity of the light reflected by the detection object varies with the portions (infrared detectors 10a and 10b) detecting the light, and hence the height of the detection object from the table 1 can be easily detected by the calculation based on the difference in light intensity between the portions (infrared detectors 10a and 10b) detecting the light.

According to the first embodiment, as hereinabove described, the height of the detection object from the table 1 is calculated on the basis of the magnitude of the difference value between the intensity of the light detected by the infrared detector 10a and the intensity of the light detected by the infrared detector 10b.Thus, the intensity of the light reflected by the detection object and detected by the infrared detector 10b is larger than the intensity of the light reflected by the detection object and detected by the infrared detector 10a when the height of the detection object from the table 1 is relatively high, and the intensity of the light reflected by the detection object and detected by the infrared detector 10a is larger than the intensity of the light reflected by the detection object and detected by the infrared detector 10b when the height of the detection object from the table 1 is relatively low. Thus, the difference between the intensity of the light detected by the infrared detector 10a and the intensity of the light detected by the infrared detector 10b is obtained, whereby the height of the detection object from the table 1 can be easily detected.

According to the first embodiment, as hereinabove described, the subtractor 12 connected to the infrared detector 10a and the infrared detector 10b is provided, and the height of the detection object from the table 1 is calculated on the basis of the magnitude of the difference value between the intensity of the light detected by the infrared detector 10a and the intensity of the light detected by the infrared detector 10b, obtained by the subtractor 12. Thus, the difference between the intensity of the light detected by the infrared detector 10a and the intensity of the light detected by the infrared detector 10b can be easily calculated by the subtractor 12.

According to the first embodiment, as hereinabove described, when the intensity of the light detected by the infrared detector 10a is smaller than the intensity of the light detected by the infrared detector 10b, the height of the detection object is determined to become larger as the difference value between the intensity of the light detected by the infrared detector 10a and the intensity of the light detected by the infrared detector 10b increases. Thus, the height of the detection object can be calculated in detail on the basis of the magnitude of the difference value between the intensity of the light detected by the infrared detector 10a and the intensity of the light detected by the infrared detector 10b.

According to the first embodiment, as hereinabove described, the adder 11 connected to the infrared detector 10a and the infrared detector 10b is provided, and the intensity of the light reflected from the detection object and detected by the infrared detector 10a and the intensity of the light reflected from the detection object and detected by the infrared detector 10b are added to each other by the adder 11 to determine the coordinates of the image projected from the red LD 61a, the green LD 62a, and the blue LD 63a at the point of time when the added intensity of the reflected light is largest as the coordinates of the detection object. Thus, the intensity of the light reflected from the nail of the finger of the user is larger than the intensity of the light reflected from the skin of the finger, and hence the portion of the image touched by the finger of the user can be accurately specified.

According to the first embodiment, the infrared LD 64a emitting the infrared laser beam having the optical axis substantially the same as that of the laser beams emitted from the red LD 61a, the green LD 62a, and the blue LD 63a emitting visible light, scanned in synchronization with the laser beams emitted from the red LD 61a, the green LD 62a, and the blue LD 63a is provided, the image 1a is projected on the table 1 by scanning the laser beams emitted from the red LD 61a, the green LD 62a, and the blue LD 63a, and the height of the detection object from the table 1 is calculated on the basis of a difference between the intensity of the light emitted from the infrared LD 64a, reflected by the detection object, and received by the infrared detector 10a and the intensity of the light emitted from the infrared LD 64a, reflected by the detection object, and received by the infrared detector 10b.Thus, even if the detection object is black, the infrared light is reflected from the detection object so that the height of the detection object from the table 1 can be detected.

According to the first embodiment, as hereinabove described, the red LD 61a, the green LD 62a, and the blue LD 63a emitting red, green, and blue visible light are provided, and the infrared LD 64a emitting infrared light is provided. Thus, the height of the detection object from the table 1 can be calculated with the infrared light reflected by the detection object while the image is displayed on the table 1 with the red, green, and blue visible light.

According to the first embodiment, as hereinabove described, the light quantities of the red, green, and blue visible light emitted from the red LD 61a, the green LD 62a, and the blue LD 63a vary according to the projected image while the light quantity of the infrared light emitted from the infrared LD 64a is substantially constant. Thus, the light quantities of the visible light vary so that the image having shades can be projected, and the light quantity of the infrared light is substantially constant so that control for emitting the infrared light can be facilitated.

According to the first embodiment, as hereinabove described, the control portion 31 performing the prescribed operations on the basis of the height of the detection object from the table 1 detected by the infrared detectors 10a and 10b is provided, whereby in addition to the operation on the table 1, the operation at the height position away from the table 1 to some extent can be easily performed on the projected image by the control portion 31.

According to the first embodiment, as hereinabove described, the image corresponding to the icon is projected on the table 1 by scanning the laser beams emitted from the red LD 61a, the green LD 62a, and the blue LD 63a, the control portion 31 determining the operation of dragging the icon or the operation of separating the detection object from the icon on the basis of the height of the detection object from the table 1 calculated on the basis of the difference between the intensity of the light detected by the infrared detector 10a and the intensity of the light detected by the infrared detector 10b is provided, and the control portion 31 is configured to project the picture representing the drag of the icon and the movement of the icon in conjunction with the movement of the detection object after determining that the icon has been dragged. Thus, in addition to the operation on the table 1 such as an operation of selecting the icon, the operation at the height position away from the table 1 to some extent such as the operation of dragging the icon can be performed, and hence the types of possible operations can be increased.

According to the first embodiment, as hereinabove described, the control portion 31 is configured to determine that the detection object has dragged the icon projected on the table 1 if the distance of the detection object from the surface of the table 1 is less than the prescribed distance, when determining that the detection object is separated from the surface of the table 1 after determining that the height of the detection object from the surface of the table 1 is substantially zero. Thus, the picture representing the drag of the icon can be easily projected on the basis of the operation of the detection object.

According to the first embodiment, as hereinabove described, the control portion 31 is configured to determine that the detection object has dropped the icon projected on the table 1 when determining that the height of the detection object from the surface of the table 1 is substantially zero after determining that the detection object has dragged the icon projected on the table 1. Thus, the picture representing the drop of the icon can be easily projected on the basis of the operation of the detection object.

According to the first embodiment, as hereinabove described, the control portion 31 is configured to determine that the detection object has released the icon projected on the table 1 if the distance of the detection object from the surface of the table 1 is at least the prescribed distance, when determining that the detection object is separated from the surface of the table 1 after determining that the height of the detection object from the surface of the table 1 is substantially zero. Thus, a picture representing the release of the icon can be easily projected on the basis of the operation of the detection object.

According to the first embodiment, as hereinabove described, the control portion 31 is configured to project the image representing the movement of the pointer in conjunction with the movement of the detection object when determining that the detection object has moved horizontally on the surface of the table 1 while the height of the detection object from the surface of the table 1 is maintained substantially zero after determining that the height of the detection object from the surface of the table 1 is substantially zero. Thus, the picture representing the movement of the pointer can be easily projected on the basis of the operation of the detection object.

### (Second Embodiment)

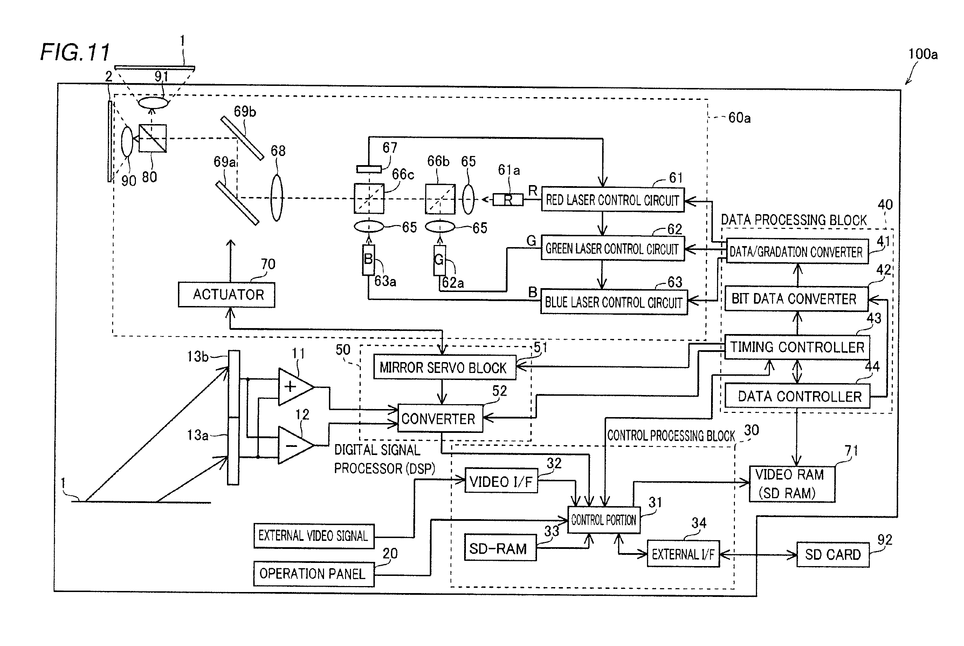

A projector 100a according to a second embodiment is now described with reference to Fig. 11. In this second embodiment, light emitted from a red LD 61a, a green LD 62a, and a blue LD 63a, reflected by a detection object is detected by visible light detectors 13a and 13b, dissimilarly to the aforementioned first embodiment in which the light emitted from the infrared LD 64a, reflected by the detection object is detected by the infrared detectors 10a and 10b.

According to the second embodiment, the two visible light detectors 13a and 13b detecting visible light are provided on a side surface of the projector 100a projecting an image 1a, as shown in Fig. 11. The visible light detector 13b is so arranged that the height thereof from a surface of a table 1 is larger than the height of the visible light detector 13a from the surface of the table 1. The visible light detector 13a is an example of the "light detector", the "first light detector", or the "height detection portion" in the present invention. The visible light detector 13b is an example of the "light detector", the "second light detector", or the "height detection portion" in the present invention.

A laser beam source 60a includes a red laser control circuit 61, a green laser control circuit 62, and a blue laser control circuit 63. Furthermore, the red laser control circuit 61, the green laser control circuit 62, and the blue laser control circuit 63 are connected with the red LD 61a emitting a red laser beam, the green LD 62a emitting a green laser beam, and the blue LD 63a emitting a blue laser beam, respectively.

According to the second embodiment, a control portion 31 is configured to calculate the height of the detection object (finger of a user) from the table 1 on the basis of a difference between the intensity of light (reflected light of the laser beams emitted from the red LD 61a, the green LD 62a, and the blue LD 63a) reflected from the detection object and detected by the visible light detector 13a and the intensity of light (reflected light of the laser beams emitted from the red LD 61a, the green LD 62a, and the blue LD 63a) reflected from the detection object and detected by the visible light detector 13b. Furthermore, the control portion 31 is configured to determine an operation of dragging an icon or an operation of separating the detection object from the icon on the basis of the height of the detection object from the table 1 detected by the visible light detectors 13a and 13b and to project a picture representing drag of the icon and movement of the icon in conjunction with movement of the detection object after determining that the icon has been dragged. The remaining structure of the second embodiment is similar to that of the aforementioned first embodiment. The operations and effects of the second embodiment are similar to those of the aforementioned first embodiment.

According to the second embodiment, as hereinabove described, the image is projected on the table 1 by scanning the visible light emitted from the red LD 61a, the green LD 62a, and the blue LD 63a, and the height of the detection object from the table 1 is calculated on the basis of the difference between the intensity of the visible light emitted from the red LD 61a, the green LD 62a, and the blue LD 63a and reflected by the detection object at the visible light detector 13a and the intensity of the visible light emitted from the red LD 61a, the green LD 62a, and the blue LD 63a and reflected by the detection object at the visible light detector 13b. Thus, the structure of the projector 100a can be simplified, dissimilarly to a case where a laser beam generation portion emitting light other than the visible light, for example, is provided separately and the height of the detection object from the table 1 is calculated with the light other than the visible light.

### (Third Embodiment)

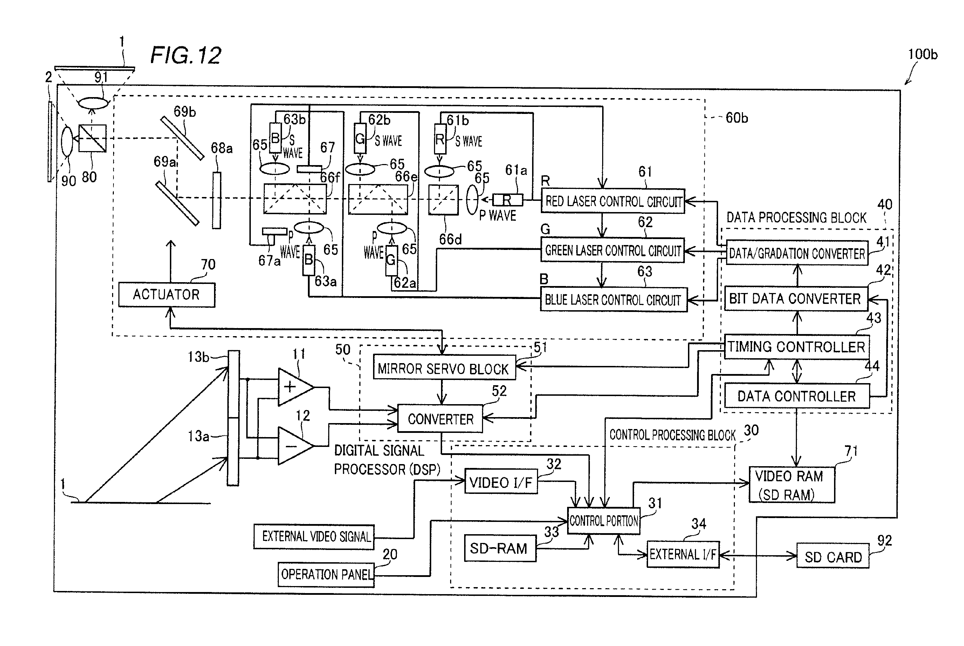

A projector 100b according to a third embodiment is now described with reference to Fig. 12. In this third embodiment, a three-dimensional image is projected on a table 1 and a screen 2, dissimilarly to the aforementioned first and second embodiments in which the planar image such as the icon is projected on the table 1 and the screen 2.

As shown in Fig. 12, a laser beam source 60b includes a red laser control circuit 61, a green laser control circuit 62, and a blue laser control circuit 63. The red laser control circuit 61 is connected with a red LD 61a emitting a red laser beam of a P wave and a red LD 61b emitting a red laser beam of an S wave. The green laser control circuit 62 is connected with a green LD 62a emitting a green laser beam of a P wave and a green LD 62b emitting a green laser beam of an S wave. The blue laser control circuit 63 is connected with a blue LD 63a emitting a blue laser beam of a P wave and a blue LD 63b emitting a blue laser beam of an S wave. The optical axes of the laser beams emitted from the red LD 61a, the red LD 61b, the green LD 62a, the green LD 62b, the blue LD 63a, and the blue LD 63b substantially coincide with each other when the laser beams are incident on a MEMS mirror 69a. The red LD 61a, the red LD 61b, the green LD 62a, the green LD 62b, the blue LD 63a, and the blue LD 63b are examples of the "laser beam generation portion" or the "first laser beam generation portion" in the present invention. According to the third embodiment, the red LD 61a, the green LD 62a, and the blue LD 63a are configured to emit either an image for a right eye or an image for a left eye, while the red LD 61b, the green LD 62b, and the blue LD 63b are configured to emit either the image for a left eye or the image for a right eye.

Furthermore, according to the third embodiment, a control portion 31 is configured to calculate the height of a detection object (finger of a user) from the table 1 on the basis of a difference between the intensity of light reflected from the detection object and detected by a visible light detector 13a and the intensity of light reflected from the detection object and detected by a visible light detector 13b and to perform prescribed operations, similarly to the aforementioned second embodiment. Specifically, the control portion 31 is configured to determine whether or not the detection object touches the three-dimensional image on the basis of the height of the detection object from the table 1 detected by the visible light detectors 13a and 13b and to project a picture representing movement of the three-dimensional image in conjunction with movement of the detection object when determining that the detection object touches the three-dimensional image.

The laser beam source 60b includes six collimator lenses 65, three polarizing beam splitters 66d, 66e, and 66f, light detectors 67 and 67a, and a spatial modulator 68a. The spatial modulator 68a is configured to be switchable to a state of transmitting the laser beams of the P waves and the laser beams of the S waves therethrough as such and to a state of rotating the polarization direction of the laser beams of the P waves and the polarization direction of the laser beams of the S waves by 90 degrees and transmitting the laser beams of the P waves and the laser beams of the S waves therethrough. The remaining structure of the third embodiment is similar to the aforementioned second embodiment.

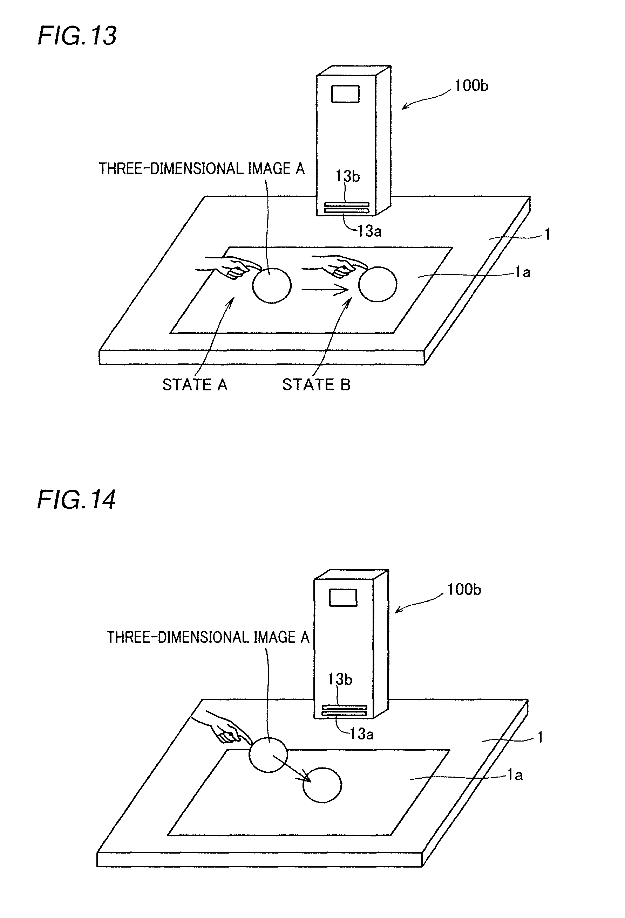

Next, an operation of projecting the three-dimensional image and an operation of moving the three-dimensional image in conjunction with movement of the detection object are described with reference to Figs. 13 to 15.

First, the red LD 61a, the green LD 62a, and the blue LD 63a emit either the image for a right eye or the image for a left eye, and the red LD 61b, the green LD 62b, and the blue LD 63b emit either the image for a left eye or the image for a right eye. The image for a right eye and the image for a left eye may be emitted simultaneously or may be emitted alternately. The user views the image for a right eye and the image for a left eye projected on the table 1 (screen 2) with polarized glasses, whereby the user can view a three-dimensional image A, as shown in Fig. 13.

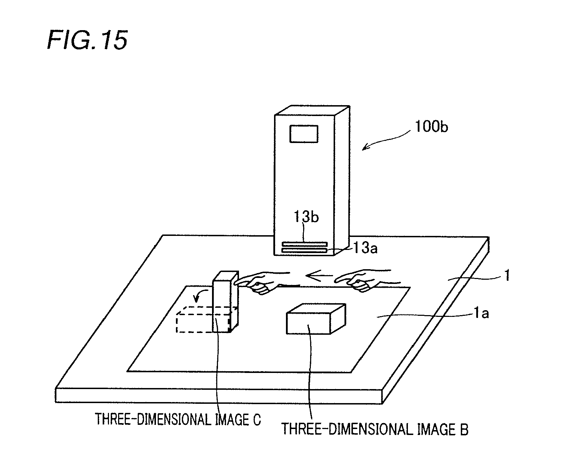

Next, when the detection object (finger of the user) is arranged on the table 1, light reflected by the detection object is detected by the visible light detectors 13a and 13b. Then, the height of the detection object from the table 1 is calculated on the basis of the difference between the intensity of the reflected light detected by the visible light detector 13a and the intensity of the reflected light detected by the visible light detector 13b. Furthermore, the coordinates of the detection object in a horizontal plane are obtained on the basis of the coordinates of an image 1a in the horizontal plane scanned with the laser beams at the point of time when the laser beams are reflected by the detection object. Consequently, the three-dimensional coordinates of the detection object are obtained. The control portion 31 determines whether or not the detection object touches the three-dimensional image A on the basis of these three-dimensional coordinates. After the control portion 31 determines that the detection object touches the three-dimensional image A as shown in a state A of Fig. 13, a picture representing horizontal movement of the three-dimensional image in conjunction with movement of the detection object is projected, as shown in a state B of Fig. 13. As shown in Fig. 14, an image representing oblique downward movement of the three-dimensional image A in conjunction with movement of the detection object can also be projected. Furthermore, the three-dimensional coordinates of the detection object are obtained, whereby an image in which the detection object passes over a three-dimensional image B without touching the three-dimensional image B whose height is smaller than the height of the detection object from the table 1 and topples a three-dimensional image C after touching the three-dimensional image C whose height is larger than the height of the detection object from the table 1 can also be projected when the detection object moves horizontally, as shown in Fig. 15.

According to the third embodiment, as hereinabove described, the red LD 61a, the green LD 62a, and the blue LD 63a and the red LD 61b, the green LD 62b, and the blue LD 63b are configured to emit the laser beams corresponding to the image for a right eye or the image for a left eye, and the three-dimensional image is projected on the table 1 by scanning the laser beams. Furthermore, the control portion 31 determining whether or not the detection object touches the three-dimensional image A (C) on the basis of the height of the detection object from the table 1 detected by the visible light detectors 13a and 13b is provided, and the control portion 31 is configured to project the picture representing the movement of the three-dimensional image A (C) in conjunction with the movement of the detection object after determining that the detection object touches the three-dimensional image A (C). Thus, in addition to the operation on the table 1 such as an operation of selecting an icon, the operation at a height position away from the table 1 to some extent such as the operation of moving the three-dimensional image A (C) can be performed, and hence the types of possible operations can be increased.

According to the third embodiment, as hereinabove described, the control portion 31 is configured to obtain the three-dimensional coordinates of the detection object by obtaining the coordinates of the detection object in the horizontal plane on the basis of the coordinates on the table 1 scanned with the laser beams at the point of time when the laser beams are reflected by the detection object in addition to the height of the detection object from the table 1 detected by the visible light detectors 13a and 13b and to determine whether or not the detection object touches the three-dimensional image on the basis of the obtained three-dimensional coordinates. Thus, the control portion 31 can more accurately determine whether or not the detection object touches the three-dimensional image, as compared with a case where the control portion 31 determines whether or not the detection object touches the three-dimensional image with only the height of the detection object from the table 1.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the example of projecting the image by emitting the laser beams of three colors of red, green, and blue has been shown in each of the aforementioned first to third embodiments, the present invention is not restricted to this. For example, laser beams of one color or two colors may be emitted to project the image, or laser beams of more than three colors may be emitted to project the image.

While the example of providing the two infrared detectors (visible light detectors) on the projector has been shown in each of the aforementioned first to third embodiments, the present invention is not restricted to this. For example, one or more than two infrared detectors (visible light detectors) may be provided on the projector.

While the example of calculating the height of the detection object from the table on the basis of the difference between the intensity of the light detected by one infrared detector (one visible light detector) and the intensity of the light detected by another infrared detector (another visible light detector) has been shown in each of the aforementioned first to third embodiments, the present invention is not restricted to this. According to the present invention, the height of the detection object from the table may be obtained by a method other than the calculation based on the difference between the intensity of the light detected by one infrared detector (one visible light detector) and the intensity of the light detected by another infrared detector (another visible light detector).

While the example of employing the infrared detectors or the visible light detectors as the light detector according to the present invention has been shown in each of the aforementioned first to third embodiments, the present invention is not restricted to this. For example, a CCD sensor or CMOS sensor may be employed as the light detector according to the present invention. The CCD sensor or CMOS sensor has photodiodes arranged in a matrix manner, and hence the CCD sensor or CMOS sensor receives the light reflected from the detection object at a surface. Thus, the intensity of the reflected light received by the CCD sensor (CMOS sensor) varies across portions of the surface of the CCD sensor (CMOS sensor). The height of the detection object from the table may be calculated on the basis of a difference in the intensity of the reflected light varying across the portions.

While the example in which the projector projects the icon, the pointer, or the three-dimensional image on the table has been shown in each of the aforementioned first to third embodiments, the present invention is not restricted to this. For example, the projector may be connected to an electronic device having no keyboard, and the projector may project an image of a keyboard on a projection area. The finger of the user may touch the projected image of the keyboard to input a key corresponding to a touched position in the electronic device. Alternatively, the projector may be connected to a notebook computer through a USB cable or the like, and the projector may project an image displayed on the notebook computer on the table. The finger of the user may touch the projected image of the notebook computer to input an operation (drag of an icon, drop of the icon, or the like) corresponding to a touched position in the notebook computer.

## Claims

1. A projector comprising:
a laser beam generation portion (61a, 61b, 62a, 62b, 63a, 63b, 64a) emitting a laser beam;
a projection portion (69a, 69b) projecting an image on an arbitrary projection area by scanning the laser beam emitted from the laser beam generation portion; and
a height detection portion (10a, 10b, 12, 13a, 13b) detecting a height of a detection object from the projection area with light reflected by the detection object.

2. The projector according to claim 1, wherein
the height detection portion includes a light detector (10a, 10b, 13a, 13b) to detect the light reflected by the detection object, and
the height of the detection object from the projection area is calculated on the basis of a difference in light intensity between portions of the light detector detecting the light reflected by the detection object.

3. The projector according to claim 2, wherein
the light detector includes a first light detector (10a, 13a) and a second light detector (10b, 13b) whose height from the projection area is higher than that of the first light detector, and
the height of the detection object from the projection area is calculated on the basis of a magnitude of a difference value between an intensity of light detected by the first light detector and an intensity of light detected by the second light detector.

4. The projector according to claim 3, further comprising a subtractor (12) connected to the first light detector and the second light detector, wherein
the height of the detection object from the projection area is calculated on the basis of the magnitude of the difference value between the intensity of the light detected by the first light detector and the intensity of the light detected by the second light detector, obtained by the subtractor.

5. The projector according to claim 3, wherein
when the intensity of the light detected by the first light detector is smaller than the intensity of the light detected by the second light detector, the height of the detection object is determined to become larger as the difference value between the intensity of the light detected by the first light detector and the intensity of the light detected by the second light detector increases.

6. The projector according to claim 3, further comprising an adder (11) connected to the first light detector and the second light detector, wherein
an intensity of light reflected from the detection object and detected by the first light detector and an intensity of light reflected from the detection object and detected by the second light detector are added to each other by the adder to determine coordinates of an image projected from the laser beam generation portion at the point of time when the added intensity of the reflected light is largest as coordinates of the detection object.

7. The projector according to claim 2, wherein
the laser beam generation portion includes a first laser beam generation portion (61a, 62a, 63a) emitting visible light and a second laser beam generation portion (64a) emitting light, other than visible light, having an optical axis substantially the same as that of the laser beam emitted from the first laser beam generation portion and scanned in synchronization with the laser beam emitted from the first laser beam generation portion,
an image is projected on an arbitrary projection area by scanning the laser beam emitted from the first laser beam generation portion, and
the height of the detection object from the projection area is calculated on the basis of a difference in an intensity of light emitted from the second laser beam generation portion and reflected by the detection object between the portions of the light detector.

8. The projector according to claim 7, wherein
the first laser beam generation portion is configured to emit red, green, and blue visible light while the second laser beam generation portion is configured to emit infrared light.

9. The projector according to claim 8, wherein
the light detector to detect the light reflected by the detection object includes an infrared detector (10a, 10b), and
the height of the detection object from the projection area is calculated on the basis of a difference in infrared light intensity between portions of the infrared detector detecting infrared light reflected by the detection object.

10. The projector according to claim 8, wherein
light quantities of the red, green, and blue visible light emitted from the first laser beam generation portion vary according to a projected image while a light quantity of the infrared light emitted from the second laser beam generation portion is substantially constant.

11. The projector according to claim 2, wherein
the laser beam generation portion is configured to emit visible light, and
an image is projected on an arbitrary projection area by scanning the visible light emitted from the laser beam generation portion while the height of the detection object from the projection area is calculated on the basis of a difference in an intensity of visible light emitted from the laser beam generation portion and reflected by the detection object between the portions of the light detector.

12. The projector according to claim 11, wherein
the light detector to detect the light reflected by the detection object includes a visible light detector (13a, 13b), and
the height of the detection object from the projection area is calculated on the basis of a difference in visible light intensity between portions of the visible light detector detecting the visible light reflected by the detection object.

13. The projector according to claim 1, further comprising a control portion (31) performing a prescribed operation on the basis of the height of the detection object from the projection area detected by the height detection portion.

14. The projector according to claim 13, wherein
an image corresponding to an icon is projected on the projection area by scanning the laser beam emitted from the laser beam generation portion, and
the control portion is configured to determine an operation of dragging the icon or an operation of separating the detection object from the icon on the basis of the height of the detection object from the projection area detected by the height detection portion and to project a picture representing drag of the icon and movement of the icon in conjunction with movement of the detection object when determining that the icon has been dragged.

15. The projector according to claim 14, wherein
the control portion is configured to determine that the detection object has dragged the icon projected on the projection area if the height of the detection object from a surface of the projection area is less than a prescribed height, when determining that the detection object is separated from the surface of the projection area after determining that the height of the detection object from the surface of the projection area is substantially zero on the basis of the height of the detection object from the projection area detected by the height detection portion.

16. The projector according to claim 15, wherein
the control portion is configured to determine that the detection object has dropped the icon projected on the projection area when determining that the height of the detection object from the surface of the projection area is substantially zero on the basis of the height of the detection object from the projection area detected by the height detection portion after determining that the detection object has dragged the icon projected on the projection area.

17. The projector according to claim 14, wherein
the control portion is configured to determine that the detection object has released the icon projected on the projection area if the height of the detection object from a surface of the projection area is at least a prescribed height, when determining that the detection object is separated from the surface of the projection area after determining that the height of the detection object from the surface of the projection area is substantially zero on the basis of the height of the detection object from the projection area detected by the height detection portion.

18. The projector according to claim 13, wherein
an image corresponding to a pointer is projected on the projection area by scanning the laser beam emitted from the laser beam generation portion, and
the control portion is configured to project an image representing movement of the pointer in conjunction with movement of the detection object when determining that the detection object has moved horizontally on a surface of the projection area while the height of the detection object from the surface of the projection area is maintained substantially zero after determining that the height of the detection object from the surface of the projection area is substantially zero on the basis of the height of the detection object from the projection area detected by the height detection portion.

19. The projector according to claim 13, wherein
the laser beam generation portion includes a plurality of laser beam generation portions (61a, 61b, 62a, 62b, 63a, 63b) emitting laser beams corresponding to an image for a right eye and an image for a left eye and is configured to project a three-dimensional image on the projection area by scanning the laser beams emitted from the plurality of laser beam generation portions, and
the control portion is configured to determine whether or not the detection object touches the three-dimensional image on the basis of the height of the detection object from the projection area detected by the height detection portion and to project a picture representing movement of the three-dimensional image in conjunction with movement of the detection object when determining that the detection object touches the three-dimensional image.

20. The projector according to claim 19, wherein
the control portion is configured to obtain three-dimensional coordinates of the detection object by obtaining coordinates of the detection object in a horizontal plane on the basis of coordinates on the projection area scanned with the laser beams at the point of time when the laser beams are reflected by the detection object in addition to the height of the detection object from the projection area detected by the height detection portion and to determine whether or not the detection object touches the three-dimensional image on the basis of the obtained three-dimensional coordinates.
